# EUROPEAN PATENT APPLICATION

(11) **EP 2 015 237 A1**
(43) Date of publication of application: **14.01.2009**
(21) Application number: 07290809.8
(22) Date of filing: 29.06.2007
(51) Int. Cl.: G06Q 10/00

(54) **Computer-implemented management system, method and computer program product**

(71) Applicant: SAP AG, 69190 Walldorf (DE)
(72) Inventor: Cases Langhoff, Guy, 69231 Rauenberg (DE); Fournet, Thierry, 75019 Paris (FR); Farjon, Franck, 75020 Paris (FR); Henry, Aurélien, 75015 Paris (FR); Lami, Jean Frédéric, 69168 Wiesloch (DE); Oddou, Rémi, 92499 Courbevoie (FR); Racca, Lionel, 75005 Paris (FR)
(74) Representative: Müller-Boré & Partner Patentanwälte

(57) **Abstract**

In order to manage at least one training plan using a computer management system, a complex data object is provided, the complex data object comprising data on: an object type; at least one attribute; a status for the training plan; and a time period; wherein the complex data object is displayed in a graphical user interface,

## Description

### Technical Field

The description is directed generally to computer-based event and task management and planning, and in particular to a complex data object, a computer-implemented method, a computer system, and a computer-implemented method for managing of training plans.

### Background

Electronic Human Resource (HR) management (e-HRmanagement) is of increasing importance for global markets. In particular, companies must react faster and more dynamic on changes. In order to react fast, efficient, and reliable on changes, HRmanagement needs to be computer-based organized. Furthermore, the role of training, coaching, and mentoring increases. Accordingly, there is a need to efficiently organize and manage training needs for a single organization as well as across a plurality of organizations possible distributed among different countries. A (training) need may be the lack between a current situation considered as difficult, unsatisfactory, compared to another situation considered as ideal. In other words, in training, a skill diagnostic may held to find training need for an employee, a team, or an organizational unit. For this purpose, an analysis is necessary to detect training need by a methodical examination of differences among competencies and those necessary to occupy a current or future employment. In order to efficiently and reliable manage such needs, a computer-based e-HRmanagement system comprising functionality for handling training needs becomes necessary.

### Summary

In one general aspect, a complex data object for a computer-implemented management system for managing at least one training plan may be provided. The complex data object may comprise data on: an object type; at least one attribute; a status for the training plan; and a time period; wherein the complex data object is displayed in a graphical user interface.

Having the complex data object rendered in a graphical user interface along with all its particularities (i.e. attributes) according to a specify training plan, a user (e.g. an employee requesting for a training need or a training administration organizing training needs) may easily and more efficiently handle training needs and training plans of multiple employees either only within a particular organization unit or across different organization units or companies. For example, the user (i.e. the employee as well as the training administration) may easily modify certain aspects belonging to a particular training need of a large and complex training plan. Modifications become immediately apparent to other users of the system. Accordingly, man-machine interaction can be made more efficient.

Furthermore training need demands and planning of training needs can be easily performed by each of the persons involved since they have simple and user-friendly access to the management system. Using complex data objects for the training needs, each request may be encapsulated by the system since each object comprises data and information required to perform the associated training need. Complex data objects for training needs may be thus easily integrated into existing HR management systems and e-learning systems. Furthermore, reliability and transparency of training need management is enhanced.

According to another aspect, the at least one attribute may comprise general data, regulatory compliance data, and/or budget data.

According to yet another aspect, the complex data object may be linked with at least one further complex data object by at least one relationship, wherein the at least one further complex data object may be a training plan object, a training need object, an organization object, and/or a catalog object.

According to yet another aspect, at least one action is performed on the complex data object, wherein the at least one action may comprise: creating, reading, updating, and/or deleting the complex data object. The action may be integrated into a local repository associated with the complex data object, The at least one action may further comprise: evaluating costs for the at least one training plan by using the at least one attribute.

Hence, budgeting for training needs may be planned for a global budget, a plurality of persons either for each organization unit separately or for more than one organization unit in common. Thus, monitoring of complex training plans for a plurality of persons, budgets, and/or organization units is eased thanks to computer-based training need planning using the management system having complex data objects encapsulating individual and/or collective training needs along with a large amount of required data and information associated with the complex data object in terms of attributes. Such amounts of data and information may be efficiently and reliable handled and/or managed by a training administration as well as a user requesting for a training need thanks to integration of the complex data objects into a computer-implemented management system such as a e- HR-management system and/or an e-learning system.

The subject matter described in this specification can be implemented as a component for a system, a method or as a system or using computer program products, particularly tangibly embodied in information carriers, such as a CD-ROM, a DVD-ROM, a semiconductor memory, and a hard disk. Furthermore, the computer program product may be embodied as a signal or data stream. Such computer program products may cause a data processing apparatus to conduct one or more operations described in this specification.

In addition, the subject matter described in this specification can also be implemented as a system including a processor and a memory coupled to the processor. The memory may encode one or more programs that cause the processor to perform one or more of the method acts described in this specification. Further the subject matter described in this specification can be implemented using various MRI machines.

Details of one or more implementations are set forth in the accompanying exemplary drawings and exemplary description below. Other features will be apparent from the description and drawings, and from the claims.

### Brief Description of the Drawings

Figure 1 shows an exemplary data model specifying a computer system for managing training needs.
Figure 2 shows a further exemplary data model specifying a computer system for managing training needs.
Figure 3 shows an exemplary screen overview of a training need object.
Figures 4A to 4D show exemplary relationships of a training need object with other complex data objects of a training need management system.
Figures 5A to 5C show screen overviews of different attributes of training need objects.
Figures 6A and 6B show exemplary flow diagrams for a use case of a demand for an employee's training need based on training need objects.
Figure 7A shows a flow diagram of a training need status based on training need objects.
Figure 7B shows a flow diagram of a training need process based on training need objects.
Figure 8 shows an exemplary computer system and/or computer network system.

### Detailed Description

In the following, a detailed description of examples will be given with reference to the drawings. It should be understood that various modifications to the examples may be made. In particular, elements of one example may be combined and used in other examples to form new examples.

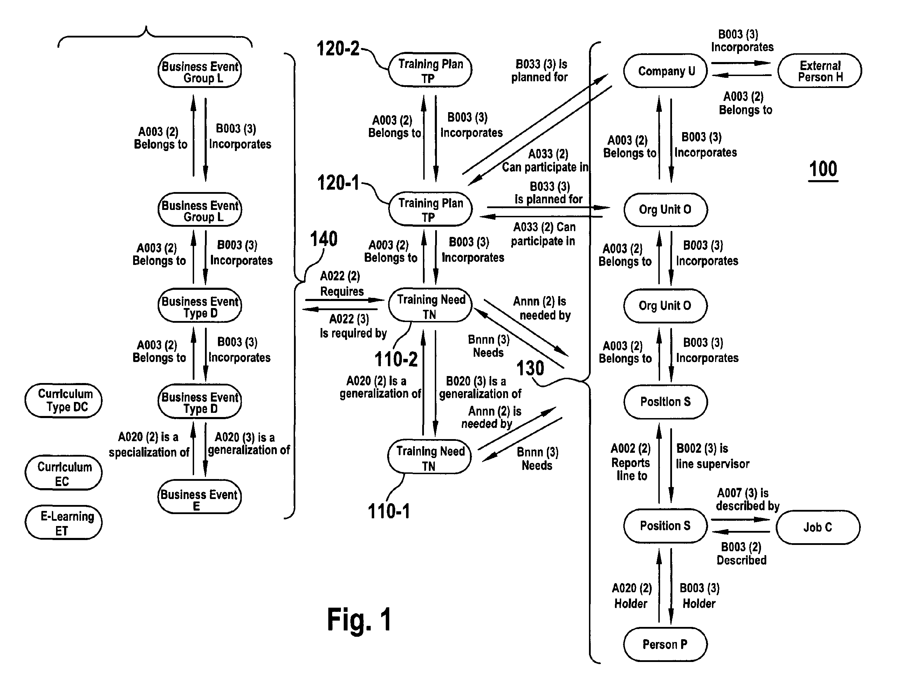

**Fig. 1** shows an exemplary data model to design a computer management system 100 for managing training needs by integrating first complex data objects 110-1, 110-2 and second complex data objects 120-1, 120-2 into an existing software solution for e-HRmanagement systems e-training management systems and/or e-leaming solutions 130,140 such as SAP LSO (learning solution) and SAP TEM (Training and Event Management), The first complex data objects 110-1, 110-2 are implemented to specify and reason with training needs and are also referred to as training need objects 110-1, 110-2. The second complex data objects 120-1, 120-2 are implemented to specify and reason with training plans and are also referred to as training plan objects 120-1, 120-2. The training need objects 110-1, 110-2 and the training plan objects 120-1, 120-2 are related to standard complex data objects 130, 140 of existing e-HRmanagement systems and e-leaming systems which are employed for training and event management. In one implementation, the training need objects 110-1, 110-2 are related to training and event management objects using one or more relationships to an interface defined for a first plurality of training and event management objects 130 which specify organizational structures of companies or organization units and to a second plurality of training and event management objects 140 which specify particular events such as business events of an organization unit or company, for example. The training plan objects 120-1, 120-2 can be implemented such that they have direct relationships to particular training and event management objects of the first plurality of training and event management objects 130.

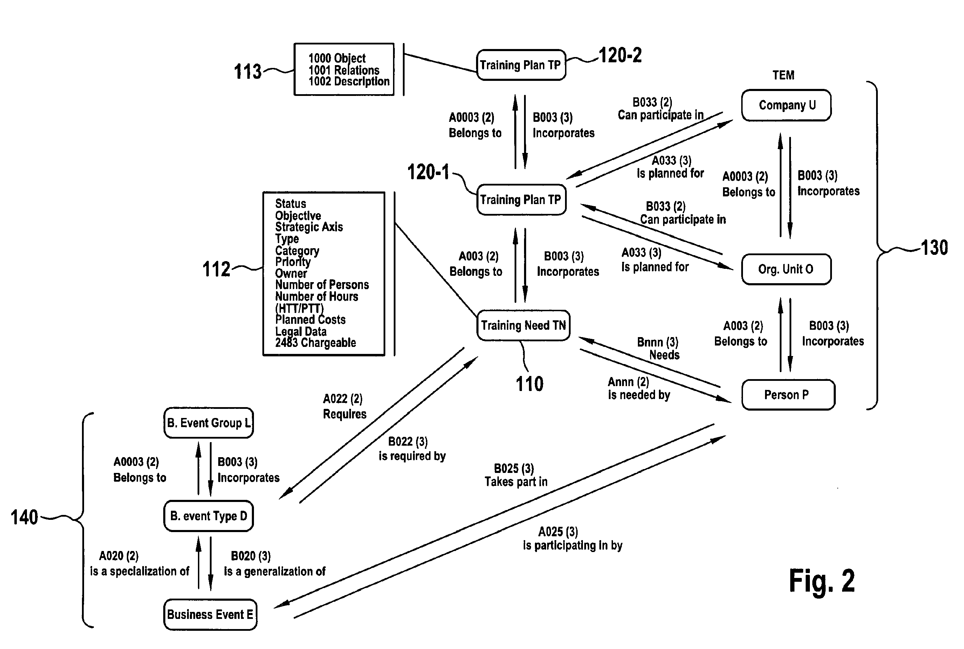

With reference to **Fig. 2**, a further example of a computer management system 100 using training need objects 110 and training plan objects 120-1, 120-2 integrated into a common e-HRmanagement system and/or e-learning systems 130, 140 in order to efficiently and reliable handle and manage in an automated process a training need request of an employee in a large organization unit and/or across different organization units, for example.

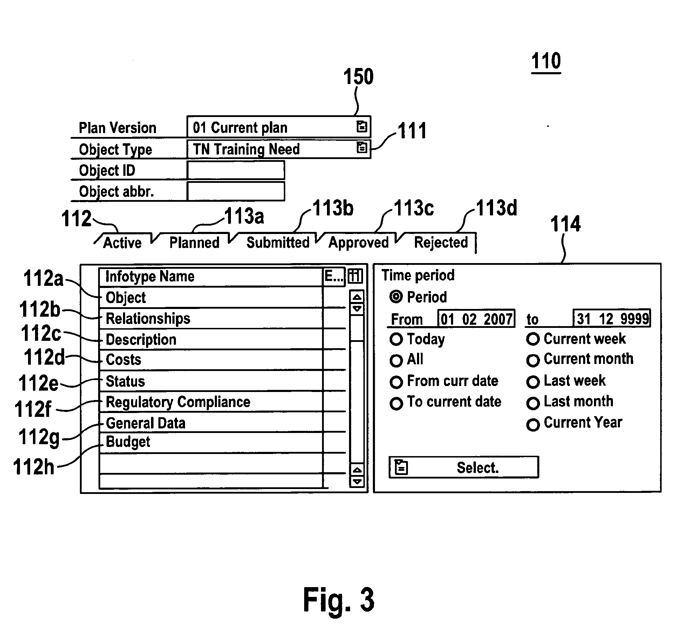

**Fig. 3** illustrates a graphical representation of a first complex data object 110, i.e. of a training need object 110. The complex data object 110 can be displayed in a graphical user interface as show in **Fig. 3**. Having the complex data object 110 rendered in a graphical user interface along with all its particularities (i.e. associated attributes and/or methods) according to specify a training plan 150, the user may easily and more efficiently handle training needs and training plans of multiple employees either only within a single organization unit and across different organization units or companies. For example, the user may easily modify certain aspects (e.g. a valid time period for the training need and a maximal cost for the trainee to overcome the training need) belonging to a particular training need of a large and complex training plan 150.

The complex data object 110 is classified into an object type 111 which named training need. Each time, a new training need (e.g. of an employee) is requested to the computer system, a new complex data object 110 of type training need is (automatically) created. The complex data object 110 is attached or related or linked to other or further complex data object such as organizational data objects 130 as show with reference to **Figs. 1** **and** **2**. In other words, each complex data object 110 employed in (automated) personal planning is assigned to an object type 111, and each object type is given an object key, to unambiguously identify the complex data object 110 in a management system 100 and stored, e.g. in a database associated with the management system 100.

The complex data object 110 may comprise data on one or more attributes 112 and a status 113a, 113b, 113c, 113d of a training plan 150 the object is associated with. Furthermore, the object 110 can be associated with a time period 115 to determine a validity time for the complex data object 110 in a (complex and/or large) training plan 150. Additionally, the object 110 is associated with or linked to an individual person or to a group of persons having similar training needs. Thus, the object 110 may be classified to model either an individual training need or a collective training need in a (currently valid) training plan 150.

In one implementation, the complex data object 110 is implemented and maintained in a database management system (e.g. a relational or object-oriented database). In such an implementation, the attributes 112 of the complex data object 110 are defined in (relational) database tables by associating with each object type an infotype and a name describing the respective infotype. Infotypes may be but are not limited to object 112a, relationship 112b, description 112c, costs 112d, status 112d, regulatory compliance 112e, general data 112f, and budget 112g as show in Fig. 3. The description infotype (or attribute) 112c may be used to add longer text descriptions to a complex data object 110. The status infotype (or attribute) 112d may be used to store a status of a complex data object 110. The status thus describes a life cycle of a complex data object 110 it is associated with. In one implementation, a status attribute 112d of a complex data object 110 is related with a validation workflow such that the valid time for the complex data object 110, i.e. its life cycle can be computed or determined by the management system 100. Furthermore, a reason may be linked to the status attribute 112d and can be proposed or prompted to the user by default, when the user queries the status of the complex data object 110. Beyond, a history of the complex data object 110 is stored in the database underlying the management system 100. The history can be determined or computed based on a status attribute 112d (or a sequence of status attributes 112d) associated with the object 110. The general data infotype (or attribute) 112f may be used to regroup objectives for a training need managed by a complex data object 110. Having a general data attribute 112f associated with a complex data object 110, it becomes possible to specify a number of persons of a training need and to retrieve training needs capacity for a session in an easy and user-friendly way.

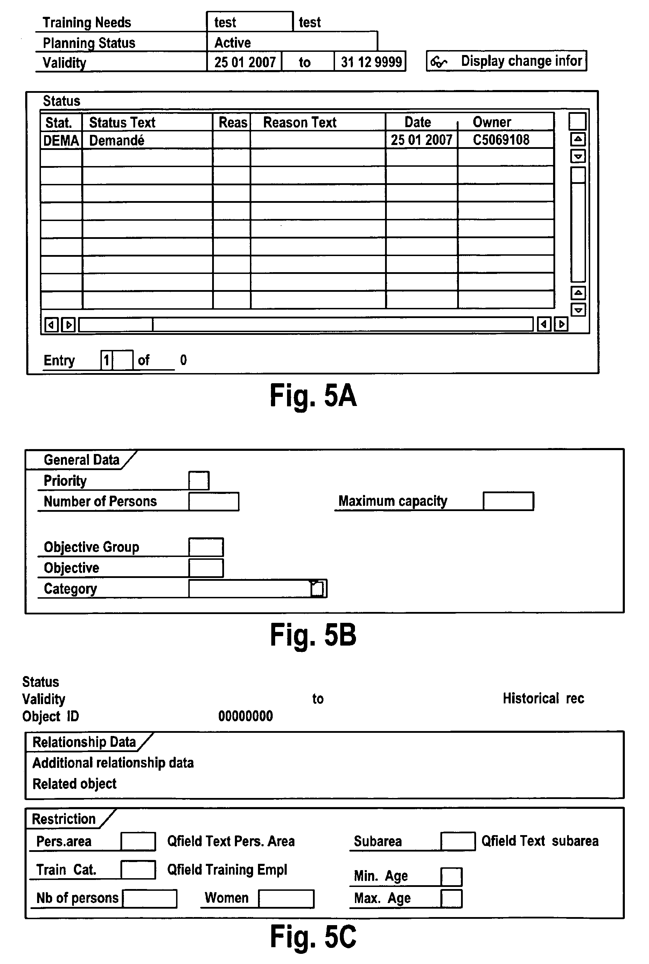

Examples of infotypes for the complex data object 110 of object type training need are shown in **Figs. 5A** and **5B. Fig. 5A** shows a user-friendly user interface for the status infortype (or attribute) 112d. **Fig. 5B** shows a user-friendly user interface for the general data infortype (or attribute) 112f. Accordingly, the infotypes may be displayed to a user in a graphical user interface such that the user may easily add and/or modify required or desired data of a training need object 110.

In other words, the attributes 112 belonging to the complex data object 110 can be classified into general data, regulatory compliance data, and cost forecast. The attributes further characterize the complex data object 110 and can be used to easily manage complex training needs and/or training need requests occurring within a single organization unit or across different organization units. Hence, complex data objects 110 easy a plurality of user tasks in managing training plans and also in comparing and/or aligning training plans of different organization units. Furthermore, the user may perform several actions on a complex data object 110, which are supported by an underlying computer management system 100.

In one implementation, general data attributes of a complex data object 110 for training needs may comprise a status (to describe a current state of a training need specified by the object 110), a priority or an owner of the object 110, a period time (to determine a validity period for the object 110), one or more persons (i.e. a person or a group of persons which are linked to the object 110), and objectives. Regulatory compliance data of a complex data object 110 for training needs can comprise training fund categories (e.g. to determine a contribution rate in France), a training type, hours allowed for a particular training need, and training plan categories such as adaptation, evolution, and/or development (e.g. of skills and/or knowledge of an employee or a group of employees). Cost forecast attributes for a planned training need of a complex data object 110 for training needs can comprise cost categories such as salary mass or transport and accommodation or lodging for one or more person planed for a trainee and single cost elements.

Implementing one or more complex data objects 110 as previously described for managing training needs, several actions may be performed on those objects 110. For example, complex data objects can be created, read, updated, and/or deleted. In one implementation, those operations are stored in a repository of the respective complex data object 110 and/or a current training plan 150, the object 110 belongs to. Furthermore, a complex data object 110 for training need may be linked to or related to another complex data object for a training need such that the object 110 inheritance attributed from the other object. Additionally, a complex data object 110 for training need may be linked to or related to organizational data objects 130 (e.g. of a HR management system) and/or catalog objects 140 (e.g. of an e-learning system) in order to ease planning trainees for a training need within and/or across organization units. Beyond, having implemented a complex data object 110 for training needs associated with several different attributes and related to other training and event management objects 130, 140, costs of trainings may be computed or evaluated comprising cost forecasts and actual costs for one or more training needs either in a single organization unit or across a plurality of organization units. Hence, budgeting for trainee ships may be planned for a global budget, a plurality of persons either for each organization unit separately or for more than one organization unit in common. Thus, monitoring of complex training plans for a plurality of persons, budgets, and/or organization units is eased thanks to computer-based training need planning using a system as described with reference to **Figs. 1** **and** **2** comprising one or more complex data objects 110 as shown with reference to **Fig. 3****.**

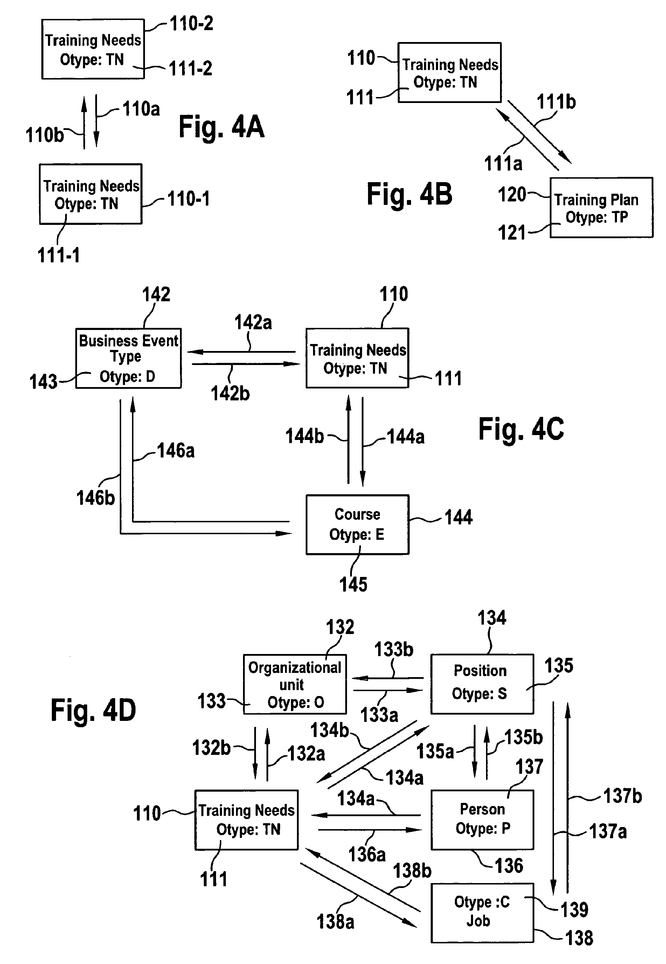

With reference to **Figs. 4A to 4D** relationships 10a, 110b, 111 a, 111 b, 142a, 142b, 144a, 144b, 146a, 146b, 132a, 132b, 133a, 133b, 134a, 134b, 135a, 135b, 136a, 136b, 137a, 137b, 138a, 138b among at least one complex data object 110 for training need and one or more other complex data objects 120, 142, 144, 132, 134, 136, 138 are shown. A relationship logically associates an object types and their corresponding objects with each other. Assigning specific relationships between objects, a data model for a computer management system 100 as shown in **Figs. 1** **and** **2** is specified or defined. Relationships describe how objects are related in order to improve (automated) training management.

**Fig. 4A** shows an exemplary relationship 110a and 110b between a first complex data object 110-1 having object type training need 111-1 and a second complex data object 110-2 having object type training need 111-2. The first complex data object 110-1 is a generalization of 110b the second complex data object 110-2. Accordingly, the second complex data object 110-2 is a specialization of 110a the first complex data object 110-1. In other words, the first and second complex data objects 110-1 and 110-2 are hierarchically ordered to each other by means of inheritance (in the sense of object-oriented inheritance). That means, the first complex data object 110-1 defines a supertype for the second complex data object 110-2, which is thus a subtype of the first one 110-1.

**Fig. 4B** shows an exemplary relationship between a first complex data object 110 of object type training need 111 and a second complex data object 120 of object type training plan 121. This mutual relationship 111 a and 111 b is defined as follows: the second complex data object 120 incorporates the first complex data object 110, Accordingly, the first complex data object 110 belongs to the second complex data object 120. In other words, a training need object 110 is a part of a training plan object 120.

In one implementation, the second complex data object 120 of type training plan 121, or training plan object 120 for short, comprises one or more attributes. The attributes may comprise standard attributes for personal disposition (PD attributes), which are e.g. used in the SAP HR-system. Additionally, one or more actions can be performed on the training plan object 120. The one or more actions may comprise create, read, update, and delete operations, which can be for example integrated in a (substantially) unique repository together with similar operations for the training need object 110. Furthermore, the actions may comprise links to further complex data objects, e.g. to construct a hierarchy of training plan objects or to organizational objects 130 for training and event management. The actions may also comprise to take snapshots of a cost status of an organized training plan. A cost status may (automatically) be reported at a given moment of time, e.g. based on a budget forecast, or actual realized training needs. The cost status can be stored in a database underlying the computer management system. Different views of a training plan based on different selection criteria. Delta reports can be also (automatically) computed for a training plan according to the data stored in accordance with the training plan object 120.

**Fig. 4C** shows relationships 142a, 142b, 144a, 144b, 146a, 146b of a complex data object 110 of object type training need 111, or training need object 110 for short, with training catalog objects 142 and 144. Training catalog objects such as a business event object 142 and a course object 144 may be e-learning objects as defined with SAP e-learning solution (LSO). As show in Fig. 4C, the training need object 110 may require 142a the business event object 142 as well as it requires 144a the course object 144. Hence, both the business event object 142 and the course object 144 are required by 142b and 144b, respectively the training need object.

**Fig. 4D** shows relationships 132a, 132b, 134a, 134b, 136a, 136b, 138a, 138b of a complex data object 110 of object type training need 111, or training need object 110 for short, with organizational objects 132, 134, 136, 138. Organizational objects such as an organizational unit object 132, a position object 134, a person object 136, and a job object 138 may by management objects as defined e.g. with SAP training and event management (TEM) system. As shown in Fig. 4D, the training need object 110 is needed 132a, 134a, 136a, 138a, by the organizational unit object 132, the position object 134, the person object 136, and the job object 138, respectively. Accordingly, the organizational unit object 132, the position object 134, the person object 136, and the job object 138 need 132b, 134b, 136b, 138b, respectively the training need object 110.

The need relationships 132a, 132b, 134a, 134b, 136a, 136b, 138a, 138b between the training need object 120 and the organizational objects 132, 134, 136, 138 can comprise a structure to store filter data. Such a mechanism allows for setting personal administration attributes in addition to information comprised in the need relationships 132a, 132b, 134a, 134b, 136a, 136b, 138a, 138b as shown in **Fig. 5C** with reference to a graphical user interface which allows for clear and easy specification of additional relationship data to the need relationships 132a, 132b, 134a, 134b, 136a, 136b, 138a, 138b. As shown in **Fig. 5C****,** different data attributes belonging to the need relationships 132a, 132b, 134a, 134b, 136a, 136b, 138a, 138b such as the number of persons.

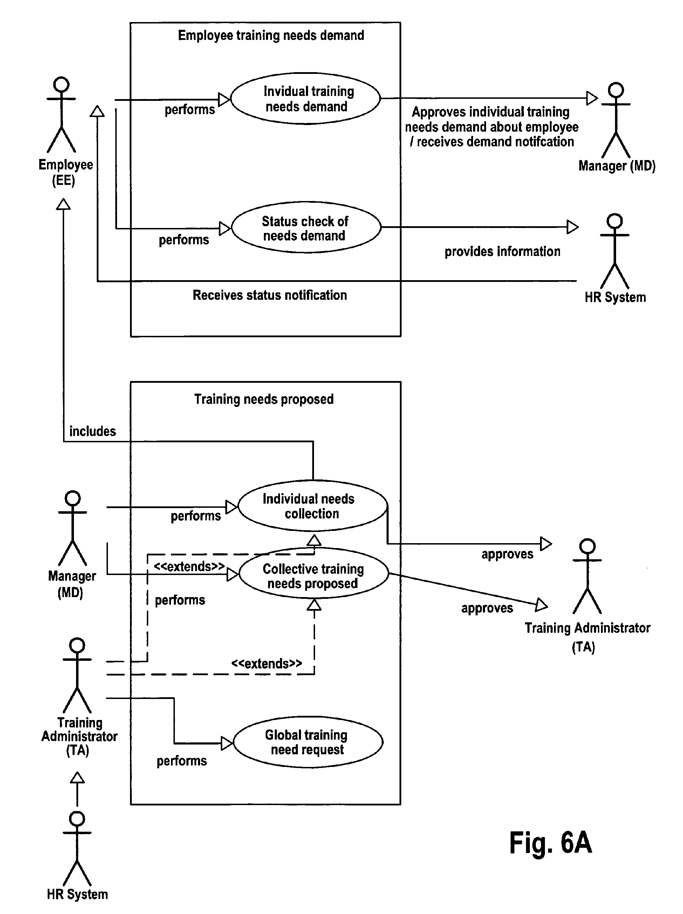

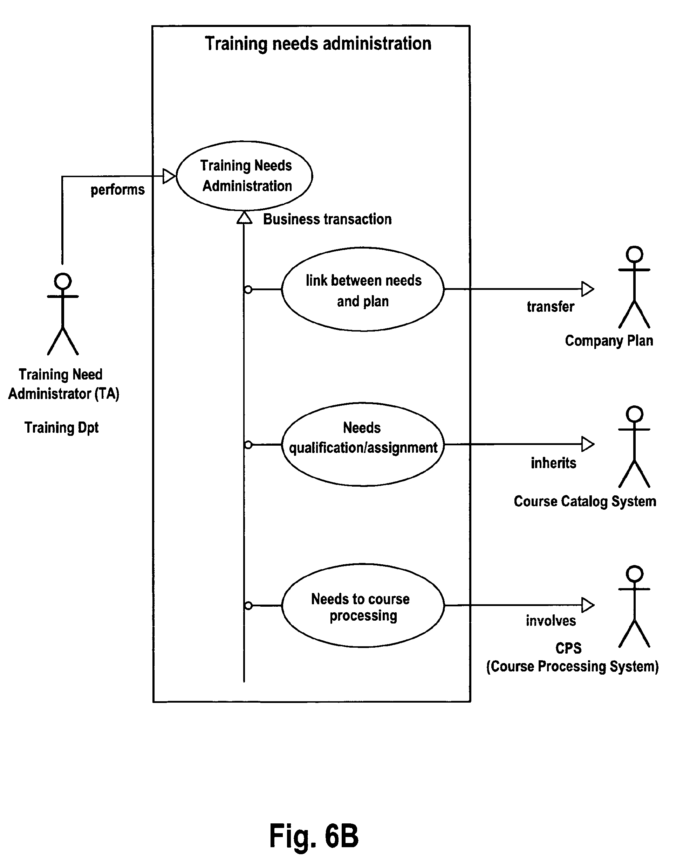

**Figs. 6A** **and** **6B** show a use case for a demand of a training need from an employee of an organization or company, wherein the training need is efficiently and automatically managed by the computer management system 100 based on an implementation using complex data objects 110, 120 having object type training need 111 and training plan 121, respectively. As shown with reference to **Fig. 6A**, an employee EE may perform an individual training need demand against the computer management system for training needs 100. The employee's EE demand is approved by a manager MD of the organization or company, e.g. by receiving notification demanded from the system 100. If the employee EE has demanded for a training need, the employee EE may query a status check of his/her demand against the system. The corresponding information is prompted to the employee EE, based on computation performed by the system 100 based on a complex data object 110 representing the training need of the employee EE, which has been created after the employee's EE demand. After having demanded a training need, a training need may be proposed to the employee EE. For this purpose, the manage MD may perform and/or extend data on individual or collective training needs by extending the created object 110 for the training need. Furthermore, a training administration TA may extend the collective training need and/or may add a global training need request for an organization unit and/or for one or more groups across different organization units. The training administration TA may also approve the individual and/or collective training needs by consulting the system 100.

From an administrative view as shown in **Fig. 6B****,** the training need administration TA has access to the system 100. Accordingly, the training need administration TA may enhance data stored with the complex data object 110 created after the demand for training need from the employee EE has been received at the system 100. The object 110 may be linked to a training plan and different training plans may be linked to each other, Furthermore, needs and qualifications and/or assignments may be inherit from a course catalog system (or e-learning system) and needs to course processing for the demanded training need may involve a course processing system.

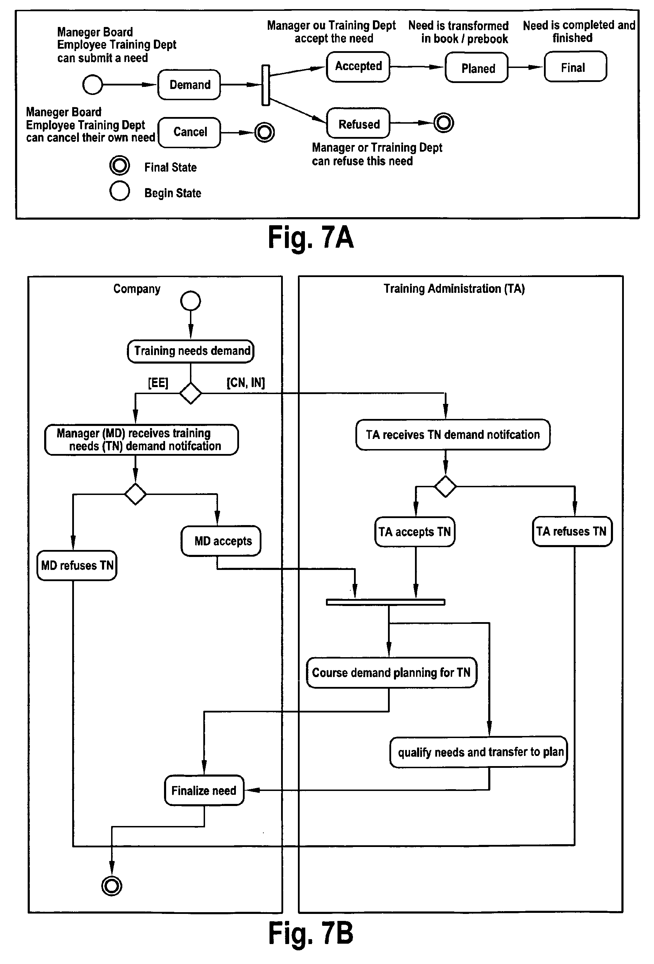

**Figs 7A** and **7B** show exemplary activity diagrams for a training need status **(****Fig. 7A****)** and a training need process **(****Fig. 7B****)** for training needs managed by the management system 100 based on complex data objects 110 for training needs. A person of an organization unit or company such as an employee EE, a manager MD or a training need administration TA from a training need department of the organization unit may submit a need for a trainee to the system 100 and may as well cancel their own request. If the demand is not canceled, the demand may be either accepted or refused by the manager MD or the training need administration TA. If accepted, the training need is planned and finalized. The steps shown with reference to **Fig. 7A** can be easily performed by each of the persons involved since they have simple and user-friendly access to the management system 100. Using complex data objects 110 for the training needs, each request may be encapsulated by the system 100 since each object 110 comprises data and information required to perform the associated training need. Furthermore, reliability and transparency of training need management is enhanced.

A temporal process of a training need demand and its planning is show in **Fig. 7B**. If an employee EE of a company has demanded a training need through the system 100, a complex data object 110 for the training need is created. A manager MD receives the training need through the system 100, e.g. by an automated notification and either accepts or refuses the demand. Additionally, the training need may be planned as a collective training need CN or an individual training need IN through the training administration TA. The training administration TA may add the necessary data and information to the corresponding complex data object 110. The training administration TA is also notified of the demand through the system 100 and accepts or refuses the demand. If the demand is accepted through the manager MD and the training administration TA, an appropriate course is planned through the training administration TA by possibly also adding qualify needs and transfer to plan. For this purpose, the complex data object 110 created for the training need is embedded into a e-HR manangement system and/or an e-learning system.

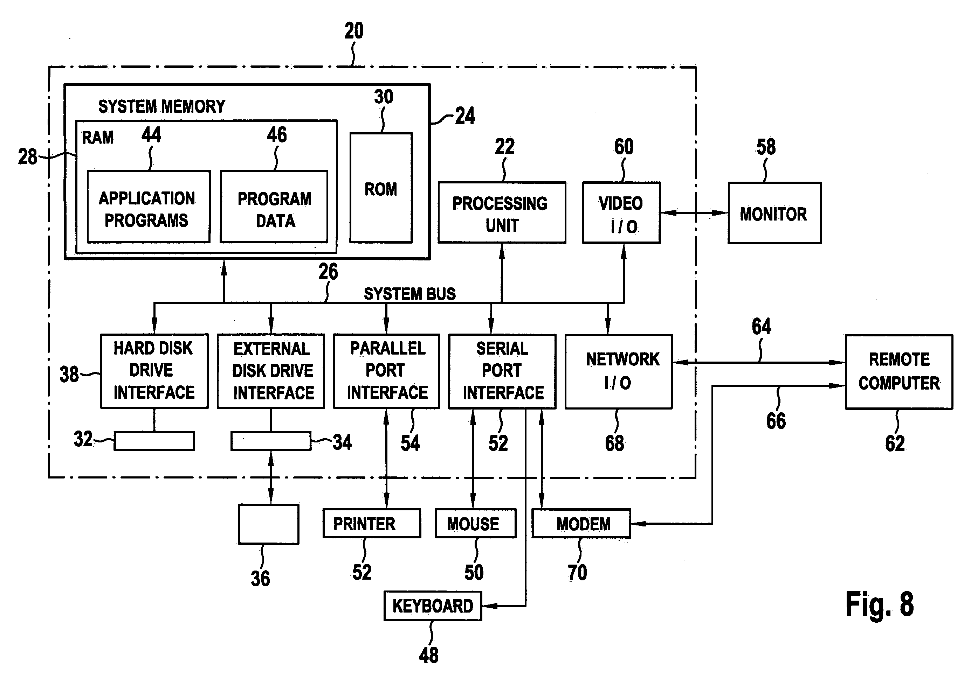

With reference to **Fig. 8****,** an exemplary system for implementing the previously described system and method includes a general purpose computing device in the form of a conventional computing environment 20 (e.g. personal computer), including at least one processing unit 22, a system memory 24, and a system bus 26, that couples various system components including the system memory 24 to the processing unit 22. The processing unit 22 may perform arithmetic, logic and/or control operations by accessing system memory 24. The system memory 24 may store information and/or instructions for use in combination with processing unit 22. The system memory 24 may include volatile and non-volatile memory, such as random access memory (RAM) 28 and read only memory (ROM) 30. A basic input/output system (BIOS) containing the basic routines that helps to transfer information between elements within the personal computer 20, such as during start-up, may be stored in ROM 30. The system bus 26 may be any of several types of bus structures including a memory bus or memory controller, a peripheral bus, and a local bus using any of a variety of bus architectures.

The personal computer 20 may further include a hard disk drive 32 for reading from and writing to a hard disk (not shown), and an external disk drive 34 for reading from or writing to a removable disk 36. The removable disk may be a magnetic disk for a magnetic disk driver or an optical disk such as a CD ROM for an optical disk drive. The hard disk drive 34 and external disk drive 34 are connected to the system bus 26 by a hard disk drive interface 38 and an external disk drive interface 40, respectively. The drives and their associated computer-readable media provide nonvolatile storage of computer readable instructions, data structures, program modules and other data for the personal computer 20. The data structures may include relevant data of the implementation of the use of a complex object for managing at least one training plan as described in more details below. The relevant data may be organized in a database, for example a relational or object database.

Although the exemplary environment described herein employs a hard disk (not shown) and an external disk 42, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 42, ROM 30 or RAM 28, including an operating system (not shown), one or more application programs 44, other program modules (not shown), and program data 46. The application programs may include at least a part of the functionality as detailed in Figs. 1 to 7B.

A user may enter commands and information, as discussed below, into the personal computer 20 through input devices such as keyboard 48 and mouse 50. Other input devices (not shown) may include a microphone (or other sensors), joystick, game pad, scanner, or the like. These and other input devices may be connected to the processing unit 22 through a serial port interface 52 that is coupled to the system bus 26, or may be collected by other interfaces, such as a parallel port interface 54, game port or a universal serial bus (USB). Further, information may be printed using printer 56. The printer 56, and other parallel input/output devices may be connected to the processing unit 22 through parallel port interface 54. A monitor 58 or other type of display device is also connected to the system bus 26 via an interface, such as a video input/output 60. In addition to the monitor, computing environment 20 may include other peripheral output devices (not shown), such as speakers or other audible output.

The computing environment 20 may communicate with other electronic devices such as a computer, telephone (wired or wireless), personal digital assistant, television, or the like, To communicate, the computer environment 20 may operate in a networked environment using connections to one or more electronic devices. **Fig. 8** depicts the computer environment networked with remote computer 62. The remote computer 62 may be another computing environment such as a server, a router, a network PC, a peer device or other common network node, and may include many or all of the elements described above relative to the computing environment 20. The logical connections depicted in **Fig. 8** include a local area network (LAN) 64 and a wide area network (WAN) 66. Such networking environments are commonplace in offices, enterprise-wide computer networks, intranets and the Internet.

When used in a LAN networking environment, the computing environment 20 may be connected to the LAN 64 through a network I/O 68. When used in a WAN networking environment, the computing environment 20 may include a modem 70 or other means for establishing communications over the WAN 66. The modem 70, which may be internal or external to computing environment 20, is connected to the system bus 26 via the serial port interface 52. In a networked environment, program modules depicted relative to the computing environment 20, or portions thereof, may be stored in a remote memory storage device resident on or accessible to remote computer 62. Furthermore other data relevant to the application of the insurance claim management evaluation method (described in more detail further below) may be resident on or accessible via the remote computer 62. The data may be stored for example in an object or a relation database. It will be appreciated that the network connections shown are exemplary and other means of establishing a communications link between the electronic devices may be used.

The above-described computing system is only one example of the type of computing system that may be used to implement the use of a complex object and the method for managing at least one training plan.

### List of Reference Numerals

20 conventional computing environment
22 processing unit
24 system memory
26 system bus
28 random access memory (RAM)
30 read only memory (ROM)
32 hard disk drive
34 external disk drive
36 removable disk
38 hard disk drive interface
40 external disk drive interface
42 external disk
44 one or more application programs
46 program data
48 keyboard
50 mouse
52 serial port interface
54 parallel port interface
56 printer
58 monitor
60 video input/output
62 remote computer
64 local area network (LAN)
66 wide area network (WAN)
68 network I/O
70 a modem
100 management system
110(110-1, 110-2) complex data object of object type training need
120 (120-1,120-2) complex data object of object type training plan
130 related organizational objects of a training and event management solution
140 related catalog objects of a e-learning solution
111 (111-1, 111-2) object type training need
112 (112-1, 112-2) object type training plan
133, 135, 137, 139 object types of organizational objects
143, 145 object types of catalog objects
132, 134, 136, 138 organizational objects
142, 144 catalog objects
110a, 110b, 136b, 111a, 111b, 132a, 132b, 133a, 133b, 134a, 134b, 135a, 135b, 136a,137a, 137b, 138a, 138b relationships
150 training plan

## Claims

1. A complex data object for a computer-implemented management system for managing at least one training plan, the complex data object comprising data on:
an object type;
at least one attribute;
a status for the training plan; and
a time period;
wherein the complex data object is displayed in a graphical user interface.

2. The complex data object according to claim 1, wherein the at least one attribute comprises general data, regulatory compliance data, and/or budget data.

3. The complex data object according to claim 1 or 2, wherein the complex data object is linked with at least one further complex data object by at least one relationship.

4. The complex data object according to any one of the preceding claims, wherein the at least one further complex data object is a training plan object, a training need object, an organization object, and/or a catalog object.

5. The complex data object according to any one of the preceding claims, wherein at least one action is performed on the complex data object.

6. The complex data object according to claim 5, wherein the at least one action comprises; creating, reading, updating, and/or deleting the complex data object, wherein the action is integrated into a local repository associated with the complex data object.

7. The complex data object according to claim 5 or 6, wherein the at least one action comprises: evaluating costs for the at least one training plan by using the at least one attribute.

8. A complex data object for a computer-implemented management system for managing at least one training plan, the complex data object comprising data on:
an object type;
at least one attribute,
at least one action performed on the complex object, wherein the action comprises: creating, reading, updating, or deleting the complex object and computing a snapshot of a cost status associated with the at least one training plan; and
at least one relationship to a further complex object, wherein the further complex object is a training plan object, a training need object, and/or an organization object.

9. A computer-implemented method for managing at least one training plan, the method comprising:
providing at least one complex data object, wherein the complex data object is classified by an object type, and comprises data on at least one attribute, a status for the training plan, and a time period; and
displaying the at least one complex data object in a graphical user interface.

10. The method according to claim 9, wherein the at least one attribute comprises general data, regulatory compliance data, and/or budget data.

11. The method according to claim 9 or 10, further comprising; linking the complex data object with at least one further complex data object by at least one relationship,

12. The method according to any one of claims 9 to 11, wherein the at least one further complex data object is a training plan object, a training need object, an organization object, and/or a catalog object.

13. The method according to any one of claims 9 to 12, further comprising: performing at least one action on the complex data object.

14. The method according to claim 13, wherein performing the at least one action comprises: creating, reading, updating, and/or deleting the complex data object and integrating the at least one action into a local repository associated with the complex data object.

15. The method according to claim 13 or 14, wherein performing the at least one action further comprises: evaluating costs for the at least one training plan by using the at least one attribute.

16. Computer program product comprising computer readable instructions, which when loaded and run in a computer and/or computer network system, causes the computer system and/or the computer network system to perform operations according to a method of any one of claims 9 to 15,

17. A computer-implemented management system for managing at least one training plan, the system comprising:
at least one complex data object, wherein the complex data object is classified by an object type, and comprises data on at least one attribute, a status for the training plan, and a time period;
at least one relationship, wherein the relationship links the complex data object with at least one further complex data object; and
a graphical user interface to display the at least one complex data object
